# EUROPÄISCHE PATENTSCHRIFT

(11) **EP 2 494 636 B1**
(45) Veröffentlichungstag und Bekanntmachung des Hinweises auf die Patenterteilung: **10.10.2018**
(21) Anmeldenummer: 10770823.2
(22) Anmeldetag: 26.10.2010
(51) Int. Cl.: H01M 4/62, H01M 10/052, H01M 4/58

(54) **STICKSTOFFHALTIGE HYDRIDANODEN UND GALVANISCHE ELEMENTE ENTHALTEND STICKSTOFFHALTIGE HYDRIDANODEN**
NITROGEN-CONTAINING HYDRIDE ANODES AND ELECTROCHEMICAL ELEMENTS CONTAINING NITROGEN-CONTAINING HYDRIDE ANODES
ANODES À BASE D'HYDRURE CONTENANT DE L'AZOTE ET ÉLÉMENTS GALVANIQUES CONTENANT DES ANODES À BASE D'HYDRURE CONTENANT DE L'AZOTE

(30) Priorität: 27.10.2009 DE 102009046047
(43) Veröffentlichungstag der Anmeldung: 05.09.2012
(73) Patentinhaber: Albemarle Germany GmbH, 65926 Frankfurt am Main (DE)
(72) Erfinder: WIETELMANN, Ulrich, 61381 Friedrichsdorf (DE)
(74) Vertreter: BASF IP Association
(86) Internationale Anmeldenummer: PCT/EP2010/066176
(87) Internationale Veröffentlichungsnummer: WO 2011/051290

(56) Entgegenhaltungen:
- US-A- 4 888 258
- DUNCAN H. GREGORY: "Lithium Nitrides as Suistainable Energy Materials.", THE CHEMICAL RECORD. THE JAPAN JOURNAL FORUM AND WILEY PERIODICALS, INC., Bd. 8, 27. August 2008 (2008-08-27), Seiten 229-239, XP002620243, online
- PING CHEN, ZHITAO XLONG, JIZHONG LUO, JIANYL LIN, KUANG LEE TAN: "Interaction of hydrogen with metal nitrides and imides.", LETTERS TO NATURE, Bd. 420, 21. November 2002 (2002-11-21), Seiten 302-304, XP002620244,

## Beschreibung

Die zurzeit verwendeten wieder aufladbaren Lithiumbatterien enthalten Graphit als Anodenmaterial. Graphit fungiert als Lithiuminsertionsmaterial und es hat gem. der Gleichung

Li + 6C → LiC₆

eine theoretische Kapazität von 372 mAh/g bei einem Potential von ca. 0,2 V *vs* Li/Li⁺. Die wesentlich höhere Speicherkapazität von Lithiummetall (3860 mAh/g) kann in praxistauglichen Batterien nicht genutzt werden, da solche Batterien weder sicher noch zyklenstabil sind. Beim Zyklen scheidet sich das Lithiummetall teilweise nicht planar, sondern in Form von Auswachsungen (Dendriten) ab. Diese Auswachsungen können den physischen Kontakt zur Metallanode verlieren, wodurch die elektrochemische Zelle entsprechend an Kapazität abnimmt. Noch gravierender sind die Folgen, wenn nadelförmige Dendriten den Separator durchdringen. Dadurch kann die Batteriezelle kurzgeschlossen werden mit häufig katastrophalen Folgen: thermischer run-away, häufig begleitet von Feuererscheinungen.

Es gab deshalb Bemühungen, statt reinem Lithiummetall Lithiumlegierungen als Anodenmaterial zu verwenden. Aber Lithiumlegierungen zeigen extrem starke Volumenschwankungen bei der Lithium- Ein- und -Auslagerung (teilweise mehrere 100 %, z.B. Li₉Al₄: 238 %). Deshalb konnten sich Legierungsanoden mit der Ausnahme von Zinn-Graphit-Kompositen am Markt nicht durchsetzen. Zinn ist jedoch ein seltenes und teures Element, was den breiten Einsatz zinnhaltiger Materialen verhinderte.

Tarascon und Aymard schlugen eine elektrochemische Zelle vor, bei der Lithiumhydrid als negative Elektrode (Anode) Verwendung findet (EP2026390A2):

MHₓ + Li ⇔ xLiH + M (1)

mit M = La, Mg, Ni, Na, Ti

Das in o. g. Patentschrift im Detail beschriebene Mg-basierte System weist jedoch eine ausgeprägte Hysterese auf und seine Funktionsfähigkeit in einer echten Lithiumbatterie konnte bisher nicht demonstriert werden.

Es ist ein Anodenmaterial gesucht, das die Nachteile des Stands der Technik vermeidet, d.h.
- eine hohe Kapazität (>> 372 mAh/g)
- und gleichzeitig eine gute Zyklenstabilität aufweist,
- und dabei keine teuren oder giftigen Bestandteile
aufweist.

Es wurde überraschend gefunden, dass galvanische Elemente, z.B. Lithiumbatterien, enthaltend eine übergangsmetallfreie Lithium-Stickstoffverbindung der Formel Li*ₒ*NH_{3-*o*}, wobei *o* = 1, 2 oder 3
in der negativen Masse (Anode) eine gute Zyklenstabilität aufweisen. Als übergangsmetallfreie Lithium-Stickstoffverbindung sind Verbindungen enthaltend oder bestehend aus LiNH₂, Li₂NH sowie Li₃N und Abmischungen aus mind. einer der genannten Verbindungen mit Lithiumhydrid (LiH) geeignet. Alle genannten übergangsmetallfreien lithiumhaltigen Verbindungen sind in gebräuchlichen aprotischen (d.h. Medien, die keine sauren Wasserstoffatome aufweisen) Elektrolyten unlöslich und sie können deshalb in galvanischen Zellen mit aprotischen Elektrolyten, beispielsweise Lithiumbatterien, verwendet werden. Aufgrund ihres niedrigen Potentials gegenüber Li/Li⁺ können sie bevorzugt als Anode (negative Elektrode) eingesetzt werden. Geeignete aprotische Elektrolyte können fest, flüssig oder gelartig sein. Insbesondere sind Flüssigelektrolyte bestehend aus Lösungen eines Lithiumsalzes (z.B. LiPF₆, LiBF₄, LiBF₂C₂O₄, LiB(C₂O₄)₂, Lithiumtriflat oder Lithiumimide wie LiTFSI) in organischen Lösungsmitteln (z.B. Kohlensäureester, Carbonsäureester und/oder Nitrilen) oder ionischen Flüssigkeiten geeignet.

Der Lithiumlade- bzw. -entladeprozess der negativen Elektrode (Anode) kann durch folgende Gleichung beschrieben werden:

LiNH₂ + *n*Li ⇔ Li_{3-*m*}NH*ₘ* + *n*/2 LiH (2)

Dabei ist
*n* = 2 oder 4;
*m* = 0 für *n* = 4 bzw. *m* = 1 *für n* = 2.

Die Teilreaktionen sind wie folgt:

LiNH₂ + 2Li ⇔ Li₂NH + LiH (2a)

Li₂NH + LiH + 2Li ⇔ Li₃N + 2LiH (2b)

Also in Summe:

LiNH₂ + 4Li ⇔ Li₃N + 2LiH (2c)

Es gibt verschiedene Möglichkeiten, übergangsmetallfreie Lithium-Stickstoffverbindungen (im folgenden als stickstoffhaltige Hydridanoden bezeichnet) als Anode für galvanische Elemente zu verwenden. So können stickstoffhaltige Hydridanoden im (teil)entladenen Zustand (Li*ₒ*NH_{3-*o*} mit *o* = 1 oder 2) gegen ein lithiiertes Insertionsmaterial, beispielsweise ein Lithiummetalloxid LiₓM³O_{y}, geschaltet werden. Die Elektrodenreaktionen sehen dann wie folgt aus:

Li*ₒ*NH_{3-*o*} + 4/*ₒ*·*x*LiₓM³*_{y}*O*_{z}* ⇔ Li₃N + 3-*o*LiH + 4/*ₒ*·*x*M³*_{y}*O*_{z}* (3)

M³ ist ein redoxaktives Metall, ausgewählt aus der Gruppe Co, Ni, Mn, Fe, V, Cr, Ti;
*x* eine ganze Zahl zwischen 1 und 3 und
*y* und *z* sind ganze Zahlen zwischen 1 und 4
o ist 1 oder 2.

Besonders bevorzugt sind folgende Lithiummetalloxide: LiCoO₂, LiNiO₂, LiMn₂O₄, Li₂MnO₃, LiVO₂ sowie gemischte Metalloxide wie Li(Ni_{1/3}Mn_{1/3}Co_{1/3})O₂, Li(Ni_{0,85}Co_{0,15})O₂, Li(Ni_{0,85}Co_{0,1}Al_{0,05})O₂ oder LiFe_{0,5}Mn_{1,5}O₄.
Statt eines Metalloxides können auch andere Lithiuminsertionsmaterialien, beispielsweise Lithiumphosphate (z.B. LiFePO₄, LiVPO₄, LiMnPO₄), Lithiumsilikate (z.B. Li₂FeSiO₄, Li₂MnSiO₄, Li₂CoSiO₄) und gemischte lithiierte Fluorometalloxide Verwendung finden.
Es ist auch möglich, die erfindungsgemäße übergangsmetallfreie stickstoffhaltige Hydridanode in (teil)entladener Form gegen lithium*freie* Kathodenmaterialen zu verschalten. In diesem Fall ist es notwendig, eine weitere Lithiumquelle zu inkorporieren. Diese Lithiumquelle ist entweder reines Lithiummetall, beispielsweise in Pulverform oder eine Lithiummetall-haltige Legierung. Bevorzugt wird reines Lithiummetall verwendet. Dann bildet sich in situ (beim ersten Ladevorgang) eine Mischung aus Lithiumhydrid und Lithiumnitrid:

Li*ₒ*NH_{3-*o*} + 4/*o*Li → 2/*o*LiH + Li₃N (4)

o = 1 oder 2

Die Elektrodenredoxreaktion ist dann wie folgt:

2/*o*LiH + Li₃N + 4/*o*M³_{y}O_{z} ⇔ Li*ₒ*NH_{3-*o*} + 4/*ₒ*·*x*LiₓM³*_{y}*O*_{z}* (5)

Die theoretische gravimetrische Kapazität von LiNH₂ beträgt gem. Gl. (2c) 4673 Ah/kg und damit etwa 12,5 mal so viel wie diejenige von Graphit. Bezogen auf die effektiv vorhandene Mischung aus Li₃N und 2 LiH beträgt die theoretische Kapazität des erfindungsgemäßen Hydridanodenmaterials 2114 Ah/kg.

Das Lithium in Gl. (4) kann auch im Überschuss eingesetzt werden. Dann bildet sich neben Lithiumhydrid ein Gemisch aus Lithium und Lithiumnitrid:

Li*ₒ*NH_{3-*o*} + 4/*o*+*a*Li → 2/*o*LiH + Li₃N + *a*Li (6)

a ist eine Zahl zwischen 0 und 5, bevorzugt zwischen 0 und 2.

Die Elektrodenredoxreaktion ist dann wie folgt:

Li*ₒ*NH_{3-*o*} + *a*Li + 4/*o*·*x*LiₓM³*_{y}*O*_{z}* ⇔ 2/*o*LiH + Li₃N + *a*Li + 4/*o*M³_{y}O_{z} (7)

Bei der Verschaltung gegen eine lithiumbeladene Insertionskathode ist es bevorzugt, die übergangsmetallfreie stickstoffhaltige Hydridanode im entladenen Zustand, d.h. in Form von LiNH₂ zu verwenden. Bei Verwendung von beispielsweise Lithiummanganspinell als Kathode besitzt die galvanische Zelle dann gem. der allgemeinen Gleichung (3) folgende Elektrodenkonfiguration:

4LiMn₂O₄ // LiNH₂

LiNH₂ + 4LiMn₂O₄ ⇔ 2LiH + Li₃N + 4Mn₂O₄ (3a)

Erfindungsgemäß ist es auch möglich, die entladene übergangsmetallfreie stickstoffhaltige Hydridanode gegen ein Gemisch aus Lithiummetall und der teilweise oder vollständig lithiumfreien Lithiuminsertionskathode zu verschalten. Die Konfiguration sieht dann beispielsweise wie folgt aus:

4 Li + 4 Mn₂O₄ // LiNH₂

Die Lithiierung des Kathodenmaterials kann entweder ex-situ (d.h. außerhalb der galvanischen Zelle) oder in der fertig montierten elektrochemischen Zelle beim Zyklisieren erfolgen.

Bei der Kombination einer lithiumfreien (oder-armen) Insertionskathode mit einer erfindungsgemäßen übergangsmetallfreien stickstoffhaltige Hydridanode ist es bevorzugt, diese im geladenen Zustand zu verwenden. Beispielsweise kann diese gegen eine Kathode bestehend aus einer geeigneten Braunsteinmodifikation geschaltet werden:

4MnO₂ // 2LiH + Li₃N

2LiH + Li₃N + 4MnO₂ ⇔ LiNH₂ + 4LiMnO₂ (5a)

Schließlich ist es möglich, ein Gemisch aus LiNH₂ und Lithiummetall gegen eine lithiumfreie (oder -arme) Insertionskathode zu verschalten, beispielsweise gegen NiO₂:

4NiO₂ // LiNH₂ + 4Li

LiNH₂ + 4Li + 4NiO₂ ⇔ 2LiH + Li₃N + 4LiNiO₂ (8)

In den obigen Reaktionsgleichungen und Elektrodenkonfigurationen sind die optimalen (also die theoretischen) stöchiometrischen Verhältnisse angegeben. Es kann sich jedoch anbieten, von diesen Verhältnissen abzuweichen, um beispielsweise die Elektrodenstabilität zu erhöhen.

Beispielsweise beträgt das theoretische Molverhältnis bei der geladenen erfindungsgemäßen übergangsmetallfreien stickstoffhaltigen Hydridanode 2 LiH : 1 Li₃N. Wird weniger LiH bezogen auf Li₃N verwendet, beispielsweise nur ein Molverhältnis von 1 : 1, so kann nicht alles Lithiumnitrid in die entladene Form, das Lithiumamid (LiNH₂), überführt werden. Vielmehr bleibt ein Teil des Lithiumnitrids auch nach der Ladung in unveränderter Form übrig oder es bildet sich die teilentladene Form Li₂NH. Die Elektrodenkonfiguration und die Lade-Entladegleichungen sehen dann beispielsweise beim Einsatz von Braunstein als Kathode wie folgt aus:

2MnO₂ // LiH + Li₃N

LiH + Li₃N + 2MnO₂ ⇔ 1/2LiNH₂ + ½Li₃N + 2LiMnO₂ (5b)

LiH + Li₃N + 2MnO₂ ⇔ Li₂NH + 2LiMnO₂ (5c)

Das nicht am Redoxprozess teilnehmende Lithiumnitrid bewirkt eine geringere Volumenänderung der Anode beim Zyklisieren, d.h. es stabilisiert sie, so dass eine weiter verbesserte Zyklenstabilität erreicht wird. In ähnlicher Weise hat auch die Teilentladung zum Lithiumimid geringere Volumenänderungen zur Folge.

Wird das erfindungsgemäße stickstoffhaltige Hydridanodenmaterial im geladenen Zustand verwendet, so kann das Molverhältnis zwischen LiH und Li₃N Werte zwischen 0,5:1 bis 10:1 einnehmen. In ähnlicher Weise kann das Molverhältnis zwischen LiNH₂ und Li Werte zwischen 1:1 bis 1:20 einnehmen.

Das erfindungsgemäße übergangsmetallfreie stickstoffhaltige Hydridanodenmaterial kann in völlig entladener Form (also als LiNH₂) eingesetzt werden oder auch im Gemisch mit Lithiumnitrid und /oder LiH. Im Allgemeinen liegen erfindungsgemäße Molverhältnisse zwischen LiNH₂, Li₃N und LiH im Bereich zwischen 1 : 0 : 0 und 1 : 0,1-2:0,1-12.

Das erfindungsgemäße übergangsmetallfreie stickstoffhaltige Hydridanodenmaterial liegt bevorzugt in Pulverform vor. Im Allgemeinen sind die Partikel < 100 µm, besonders bevorzugt < 30 µm groß. Bevorzugt werden den erfindungsgemäßen übergangsmetallfreien stickstoffhaltigen Hydridanodenmaterialien leitfähigkeitsverbessernde Additive, beispielsweise Graphit, Leitruß oder fein verteilte Metalle (z.B. Ti-Pulver) beigemischt.

Im Sinne der Erfindung ist es möglich, einen Teil des Lithiums durch ein anderes Element der ersten oder zweiten Hauptgruppe des Periodensystems zu ersetzen. Beispielsweise ist es möglich, ein Gemisch aus Lithiumamid und Magnesiumamid zu verwenden. Da das Fremdmetall die Speicherkapazität herabsetzt, sollte dessen Anteil nicht zu hoch gewählt werden. Bevorzugt beträgt der Lithiumanteil bezogen auf den Gesamtmetallgehalt des erfindungsgemäßen übergangsmetallfreien stickstoffhaltigen Hydridanodenmaterials mindestens 80 mol%, bevorzugt mind. 90 mol% und besonders bevorzugt mind. 95 mol%.

Die Herstellung des entladenen übergangsmetallfreien stickstoffhaltigen Hydridanodenmaterials erfolgt nach Stand der Technik beispielsweise durch Umsetzung von Lithiumhydrid mit Ammoniak bei Temperaturen über 300 °C gemäß

LiH + NH₃ → LiNH₂ + H₂ (9)

Eine besonders feinteilige Form wird durch thermische Zersetzung von Lithiumbronze (Li(NH₃)₄) erhalten:

Li(NH₃)₄ → LiNH₂ + 3NH₃ + ½H₂ (10)

Besonders vorteilhaft wird diese Umsetzung in einem inerten Lösungsmittel (Kohlenwasserstoffe, beispielsweise Hexan, Heptan, Toluol) und in Gegenwart eines Wasserstoffakzeptors, beispielsweise eines 1,3-Diens wie Isopren durchgeführt:

Li(NH₃)₄ + ½C₅H₈ → LiNH₂ + 3NH₃ + ½C₅H₁₀ (11)

Das geladene erfindungsgemäße übergangsmetallfreie stickstoffhaltige Hydridanodenmaterial wird beispielsweise durch Abmischen von Lithiumhydrid und Lithiumnitrid hergestellt. Falls die Einzelkomponenten nicht die gewünschte Partikelgrößenverteilung aufweisen, also sie beispielsweise zu grob sind, können sie getrennt oder besonders bevorzugt in Mischung gemahlen werden. Dieser Vorgang erfolgt unter Ausschluss von Luft und Feuchtigkeit unter Wasserstoff- oder Inertgasatmosphäre (Stickstoff oder Edelgase) z.B. mittels einer Kugel- oder Stabmühle. Dem Mahlgut können Leitfähigkeitsverbesserer wie Graphit beigemischt werden.

Eine weitere besonders bevorzugte Methode zur Herstellung eines Lithiumhydrid/Lithiumnitrid-Gemisches besteht in der Umsetzung von LiNH₂ mit Lithiummetall:

LiNH₂ + 4Li → 2LiH + Li₃N (12a)

LiNH₂ + 2Li → 1LiH + Li₂NH (12b)

Je nach Stöchiometrie wird entweder Lithiumnitrid oder Lithiumimid erhalten. Selbstverständlich kann auch von den obigen theoretischen Verhältnissen abgewichen werden und ein beliebiges Molverhältnis zwischen LiNH₂ und Li gewählt werden. Wird beispielsweise ein Molverhältnis von 1:3 gewählt, so erhält man ein 1:1 - Gemisch aus Lithiumnitrid und Lithiumimid. Bevorzugt beträgt das Molverhältnis zwischen LiNH₂ und Li 0,5 : 1 bis 6 : 1. Die genaue Stöchiometrie muss beim Bau einer galvanischen Zelle berücksichtigt werden, d.h. es muss eine dem Fachmann geläufige Balancierung der Elektrodenmassen vorgenommen werden, um eine möglichst vollständige Ausschöpfung der Kapazitäten *beider* Elektroden zu erreichen.

Die Umsetzungen nach (12a) bzw. (12b) werden bevorzugt entweder unter Mahlbedingungen oder thermisch in Substanz (d.h. lösemittelfrei) oder in Dispersion in einem hochsiedenden inerten Lösemittel (z.B. Paraffinöl) bei Temperaturen über dem Schmelzpunkt von Lithium (180,5 °C) vorgenommen. Wird das Lithium im Überschuss eingesetzt, so wird eine Mischung aus elementarem Li und Lithiumhydrid sowie Lithiumnitrid erhalten.

## Patentansprüche

1. Galvanisches Element, enthaltend eine übergangsmetallfreie stickstoffhaltige Hydridanode, eine Übergangsmetall-haltige Kathode und einen aprotischen Lithiumelektrolyten , wobei die stickstoffhaltige Hydridanode im entladenen Zustand Lithiumamid enthält oder neben Lithiumamid auch Lithiumimid enthält und, dass die Anode im geladenen Zustand Lithiumhydrid enthält, wobei die Anode enthaltend eine übergangsmetallfreie stickstoffhaltige Substanz der allgemeinen Formel Li*ₒ*NH_{3-*o*}, wobei *o* = 1, 2 oder 3, und im geladenen Zustand mit Lithiumhydrid gemischt, mit einem teilweise oder vollständig lithiierten Lithiuminsertionsmaterial durch einen Separator/Elektrolytverbund in Kontakt gebracht ist und die Molverhältnisse zwischen LiNH₂, Li₃N und LiH im Bereich zwischen 1 : 0 : 0 und 1 : 0,1 -2 : 0,1 -12 liegen.

2. Galvanisches Element nach Anspruch 1, **dadurch gekennzeichnet, dass** es als Kathode ein teil- oder vollständig lithiiertes Lithiuminsertionsmaterial enthält.

3. Galvanisches Element nach Anspruch 2, **dadurch gekennzeichnet, dass** es als Lithiuminsertionsmaterial ein Lithiummetalloxid, ein lithiiertes Phosphat, ein lithiiertes Silikat oder ein gemischtes lithiiertes Fluorometalloxid enthält.

4. Verfahren zur Herstellung einer Lithiumbatterie, **dadurch gekennzeichnet, dass** eine Anode enthaltend eine übergangsmetallfreie stickstoffhaltige Substanz der allgemeinen Formel Li*ₒ*NH_{3-*o*}, wobei *o* = 1, 2 oder 3, und im geladenen Zustand mit Lithiumhydrid gemischt, mit einem teilweise oder vollständig lithiierten Lithiuminsertionsmaterial durch einen Separator/Elektrolytverbund in Kontakt gebracht wird, wobei die Molverhältnisse zwischen LiNH₂, Li₃N und LiH im Bereich zwischen 1 : 0 : 0 und 1 : 0,1 -2 : 0,1 -12 liegen.

5. Verfahren nach Anspruch 4, **dadurch gekennzeichnet, dass** das Lithiuminsertionsmaterial ein Lithiummetalloxid, ein Lithiumphosphat, ein Lithiumsilikat, ein lithiiertes Fluorometalloxid oder eine Mischung aus den genannten Stoffgruppen ist.

6. Verwendung einer negativen Masse in einem galvanischen Element gemäß Anspruch 1 bis 3, **dadurch gekennzeichnet, dass** diese eine stickstoffhaltigen Hydridanode ist, die Lithiumamid, Lithiumimid und/oder Lithiumnitrid enthält.

7. Verwendung einer negativen Masse nach Anspruch 6, **dadurch gekennzeichnet, dass** sie leitfähigkeitsverbessernde Additive in Form von Graphit, Leitruß oder fein verteilten Metallen enthält.

## Claims

1. A galvanic cell, comprising a transition metal-free, nitrogen-containing hydride anode, a transition metal-containing cathode and an aprotic lithium electrolyte, wherein the nitrogen-containing hydride anode in the discharged state contains lithium amide or lithium amide and lithium imide, and that in the charged state the anode contains lithium hydride, wherein the anode containing a transition metal-free, nitrogen-containing substance has the general formula Li*ₒ*NH_{3-*o*}, wherein *o* = 1, 2 or 3, and in the charged state, mixed with lithium hydride, is brought into contact with a partly or completely lithiated lithium insertion material via a separator/electrolyte composite, and the molar ratios of LiNH₂, Li₃N and LiH are in the range between 1 : 0 : 0 and 1 : 0.1 - 2 : 0.1 - 12.

2. The galvanic cell according to claim 1, **characterized in that** as the cathode it contains a partially or completely lithiated lithium insertion material.

3. The galvanic cell according to claim 2, **characterized in that** as the lithium insertion material it contains a lithium metal oxide, a lithiated phosphate, a lithiated silicate or a mixed lithiated fluorometal oxide.

4. A method for producing a lithium battery, **characterized in that** an anode containing a transition metal-free, nitrogen-containing substance of general formula Li*ₒ*NH_{3-*o*}, wherein *o* = 1, 2 or 3, and mixed with lithium hydride in the charged state, is brought into contact with a completely lithiated lithium insertion material via a separator/electrolyte composite, wherein the molar ratios of LiNH₂, Li₃N and LiH are in the range between 1 : 0 : 0 and 1 : 0.1 - 2 : 0.1 - 12.

5. The method according to claim 4, **characterized in that** the lithium insertion material is a lithium metal oxide, a lithium phosphate, a lithium silicate, a
lithiated fluorometal oxide or a mixture of the above-named groups of substances.

6. The use of a negative mass in a galvanic cell according to claims 1 to 3, **characterized in that** this is a nitrogen-containing hydride anode containing lithium amide, lithium imide and/or lithium nitride.

7. The use of a negative mass according to claim 6, **characterized in that** it contains conductivity-improving additives in the form of graphite, conductive carbon black or finely divided metals.

## Revendications

1. Élément galvanique, comportant une anode à base d'hydrure contenant de l'azote, dépourvue de métal de transition, une cathode contenant un métal de transition et un électrolyte de lithium aprotique, dans lequel l'anode à base d'hydrure contenant de l'azote contient de l'amide de lithium à l'état déchargé ou contient également de l'imide de lithium, en plus de l'amide de lithium, et l'anode contient de l'hydrure de lithium à l'état chargé, dans lequel l'anode présentant une substance contenant de l'azote dépourvue de métal de transition de formule générale Li*ₒ*NH_{3-*o*}, dans laquelle *o* = 1, 2 ou 3, et mélangée à l'état chargé avec de l'hydrure de lithium, est mise en contact avec un matériau d'insertion de lithium partiellement ou entièrement lithié par le biais d'un composite séparateur/électrolyte et les rapports molaires entre LiNH₂, Li₃N et LiH sont compris dans la plage entre 1:0:0 et 1:0,1-2:0,1-12.

2. Élément galvanique selon la revendication 1, **caractérisé en ce qu'**il contient un matériau d'insertion de lithium partiellement ou entièrement lithié comme cathode.

3. Élément galvanique selon la revendication 2, **caractérisé en ce qu'**il contient un oxyde métallique de lithium, un phosphate lithié, un silicate lithié ou un oxyde métallique fluoré lithié mélangé comme matériau d'insertion de lithium.

4. Procédé de fabrication d'une batterie au lithium, **caractérisé en ce qu'**une anode présentant une substance contenant de l'azote dépourvue de métal de transition de formule générale Li*ₒ*NH_{3-*o*}, dans laquelle *o* = 1, 2 ou 3, et mélangée à l'état chargé avec de l'hydrure de lithium, est mise en contact avec un matériau d'insertion de lithium partiellement ou entièrement lithié par le biais d'un composite séparateur/électrolyte, dans lequel les rapports molaires entre LiNH₂, Li₃N et LiH sont compris dans la plage entre 1:0:0 et 1:0,1-2:0,1-12.

5. Procédé selon la revendication 4, **caractérisé en ce que** le matériau d'insertion de lithium est un oxyde métallique de lithium, un phosphate de lithium, un silicate de lithium, un oxyde de métal fluoré lithié ou un mélange des groupes de substances cités.

6. Utilisation d'une masse négative dans un élément galvanique selon la revendication 1 à 3, **caractérisée en ce que** celle-ci est une anode à base d'hydrure contenant de l'azote qui contient de l'amide de lithium, de l'imide de lithium et/ou du nitrure de lithium.

7. Utilisation d'une masse négative selon la revendication 6, **caractérisée en ce qu'**elle contient des additifs améliorant la conductivité sous forme de graphite, de suie conductrice ou de métaux finement répartis.
